# EUROPEAN PATENT APPLICATION

(11) **EP 4 604 304 A1**
(43) Date of publication of application: **20.08.2025**
(21) Application number: 23877395.6
(22) Date of filing: 04.04.2023
(51) Int. Cl.: H01M 50/516, H01M 50/557, H01M 50/566, H01M 50/567, H01M 50/562, H01M 50/54, H01M 50/174, H01M 50/209

(54) **SECONDARY BATTERY AND BATTERY MODULE INCLUDING SAME**

(30) Priority: 14.10.2022 KR 20220132144
(71) Applicant: SAMSUNG SDI CO., LTD., Yongin-si, Gyeonggi-do 17084 (KR)
(72) Inventor: BAE, Kwang Soo, Yongin-si, Gyeonggi-do 17084 (KR); YONG, Jun Sun, Yongin-si, Gyeonggi-do 17084 (KR); LEE, Jun Hyung, Yongin-si, Gyeonggi-do 17084 (KR); KIM, Jung Soo, Yongin-si, Gyeonggi-do 17084 (KR)
(74) Representative: Marks & Clerk LLP
(86) International application number: PCT/KR2023/004545
(87) International publication number: WO 2024/080463

(57) **Abstract**

The present invention relates to a battery module in which terminals of two secondary batteries are directly coupled by welding, and which thus does not require a separate component for electrical connection and can reduce electrical contact resistance. Disclosed as an embodiment of the present invention is a battery module comprising a first secondary battery and a second secondary battery having the same structure as the first secondary battery, the first secondary battery comprising: an electrode assembly having a first electrode tab and a second electrode tab respectively exposed on both sides thereof; a case accommodating the electrode assembly and having two open sides; a first cap plate sealing one open side of the case; a first terminal electrically connected to the first electrode tab and exposed to the outside of the first cap plate; a second cap plate sealing the other open side of the case; and a second terminal electrically connected to the second electrode tab and exposed to the outside of the second cap plate, wherein a first protrusion portion protruding outwardly from the first terminal of the first secondary battery is coupled to and connected in series, by welding, with a second recessed portion recessed into the second terminal of the second secondary battery.

## Description

### TECHNICAL FIELD

Various embodiments of the present invention relate to a secondary battery and a battery module including same.

### BACKGROUND ART

A secondary battery is a power storage system that provides excellent energy density by converting electrical energy into chemical energy and storing the chemical energy. Compared to primary batteries, secondary batteries are designed to be rechargeable and are widely used to power IT devices, such as smartphones, cellular phones, laptops, tablet PCs, and the like. Recently, interest in electric vehicles has increased to prevent environmental pollution, and accordingly, high-capacity secondary batteries are being adopted for electric vehicles. Such secondary batteries should have certain characteristics, such as high density, high power, and stability.

Secondary batteries may be made larger in size or longer in one direction for higher output, but there are limitations to increasing size and length. For this, a busbar should be additionally applied to connect two secondary batteries, which thus may increase resistance and complicate the process.

The above information disclosed in this Background section is only for enhancement of understanding of the background of the invention and therefore it may contain information that does not constitute prior art.

### DETAILED DESCRIPTION OF THE INVENTION

### TECHNICAL PROBLEM

The present invention provides a secondary battery and a battery module including same, in which terminals of two secondary batteries are directly coupled by welding, and which thus does not require a separate component for electrical connection and can reduce electrical contact resistance.

In addition, the present invention provides a secondary battery and a battery module including same, in which by separating terminals of two secondary batteries from each other except for the area where the terminals are directly coupled by welding, the amount of displacement in contact resistance can be minimized.

### SOLUTION TO TECHNICAL PROBLEM

A secondary battery and a battery module including same, according to embodiments of the present invention, may comprise a first secondary battery and a second secondary battery having the same structure as the first secondary battery, wherein the first secondary battery comprises: an electrode assembly having a first electrode tab and a second electrode tab respectively exposed on both sides thereof; a case accommodating the electrode assembly and having two open sides; a first cap plate sealing one open side of the case; a first terminal electrically connected to the first electrode tab and exposed to the outside of the first cap plate; a second cap plate sealing the other open side of the case; and a second terminal electrically connected to the second electrode tab and exposed to the outside of the second cap plate, wherein a first protrusion portion protruding outwardly from the first terminal of the first secondary battery is coupled to and connected in series, by welding, with a second recessed portion recessed into the second terminal of the second secondary battery.

The first terminal may include: a first inner terminal plate positioned on the inner side of the first cap plate; a first outer terminal plate positioned on the outer side of the first cap plate and having a first protrusion portion protruding outwardly and a first recessed portion recessed into an outer surface thereof; and a first terminal pillar rivet-coupled to the first inner terminal plate on the inner side of the first cap plate and passing through the first cap plate to be coupled, by riveting or welding, to the first outer terminal plate on the outer side of the first cap plate.

The first outer terminal plate may be made of the same metal as the second terminal and may be made of a dissimilar metal to the first inner terminal plate.

The first protrusion portion may be positioned at the center of the outer surface of the first outer terminal plate, and the first recessed portion may be provided in a ring shape along the edge of the outer surface of the first outer terminal plate.

The second terminal may include: a second inner terminal plate positioned on the inner side of the second cap plate; a second outer terminal plate positioned on the outer side of the second cap plate and having a second recessed portion recessed into the center of the outer surface and a second protrusion portion protruding outwardly in a ring shape along the edge of the outer surface; and a second terminal pillar rivet- and/or weld-coupled to the second inner terminal plate on the inner side of the second cap plate and passing through the second cap plate to be coupled, by riveting or welding, to the second outer terminal plate on the outer side of the second cap plate.

The second inner terminal plate, the second outer terminal plate, and the second terminal pillar may be made of the same metal.

The first protrusion portion of the first outer terminal plate of the first secondary battery may be in contact with the second recessed portion of the second outer terminal plate of the second secondary battery.

The first protrusion portion of the first outer terminal plate of the first secondary battery and the second recessed portion of the second outer terminal plate of the second secondary battery may be spaced apart from each other.

The first outer terminal plate may include a first body portion in the shape of a flat plate, the first protrusion portion may extend along a first direction, which is the longitudinal direction of the first cap plate, on one side of the first body portion, and the first recessed portion may extend along the first direction on the other side of the outer surface of the first body portion.

The second terminal may include: a second inner terminal plate positioned on the inner side of the second cap plate; a second outer terminal plate positioned on the outer side of the second cap plate and having a second body portion in the shape of a flat plate, a second recessed portion recessed into one side of the outer surface of the second body portion extending along the first direction, and a second protruding portion protruding outwardly from the other side of the outer surface of the second body portion extending along the first direction on the other side of the outer surface of the second body portion; and a second terminal pillar rivet- and/or weld-coupled to the second inner terminal plate on the inner side of the second cap plate and passing through the second cap plate to be coupled, by riveting or welding, to the second outer terminal plate on the outer side of the second cap plate.

The first body portion of the first outer terminal plate of the first secondary battery may be in contact with the second body portion of the second outer terminal plate of the second secondary battery.

The first body portion of the first outer terminal plate of the first secondary battery and the second body portion of the second outer terminal plate of the second secondary battery may be spaced apart from each other.

The secondary battery may further include a first current collector electrically connecting the first electrode tab and the first terminal to each other; and a second current collector electrically connecting the second electrode tab and the second terminal to each other.

### ADVANTAGEOUS EFFECTS OF INVENTION

In a secondary battery and a battery module including same, according to embodiments of the present invention, terminals of two secondary batteries are directly coupled by welding, and thus does not require a separate component for electrical connection and can reduce electrical contact resistance.

In a secondary battery and a battery module including same, according to embodiments of the present invention, by separating terminals of two secondary batteries from each other except for the area where the terminals are directly coupled by welding, the amount of displacement in contact resistance can be minimized.

### BRIEF DESCRIPTION OF DRAWINGS

FIGS. 1A and 1B are a perspective view and a partially enlarged view of an exemplary battery module according to the present invention.
FIGS. 2A and 2B are examples of cross-sectional views taken along line 2-2' of FIG. 1B.
FIGS. 3A to 3C are a perspective view, a cross-sectional view, and an exploded perspective view of a secondary battery in the battery module shown in FIGS. 1A and 1B.
FIGS. 4A and 4B are enlarged perspective views of a first outer terminal plate and a second outer terminal plate of the secondary battery shown in FIGS. 3A and 3B.
FIGS. 5A and 5B are a perspective view and a partially enlarged view of an exemplary battery module according to the present invention.
FIGS. 6A and 6B are enlarged plan views of a portion of the battery module of FIG. 5B.
FIGS. 7A and 7B are a perspective view and a cross-sectional view of the secondary battery of the battery module shown in FIGS. 5A and 5B.
FIGS. 8A and 8B are enlarged perspective views of a first outer terminal plate and a second outer terminal plate of the secondary battery shown in FIGS. 7A and 7B.

### MODE FOR CARRYING OUT THE INVENTION

Hereinafter, example embodiments of the present invention will be described with reference to the accompanying drawings.

Examples of the present invention are provided to more completely explain the present invention to those skilled in the art, and the following examples may be modified in various other forms and the scope of the present invention is not limited to the following examples. Rather, these embodiments are provided so that the present disclosure will be thorough and complete, and will fully convey the scope of the invention to those skilled in the art.

In addition, in the drawing figures, the dimensions of layers and regions may be exaggerated for clarity of illustration, and like reference numerals refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms that the terms "comprise" and/or "comprising," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

Hereinafter, preferred embodiments of the present invention will be described in detail with reference to the attached drawings so that a person having ordinary skill in the art to which the present invention pertains can easily carry out the present invention.

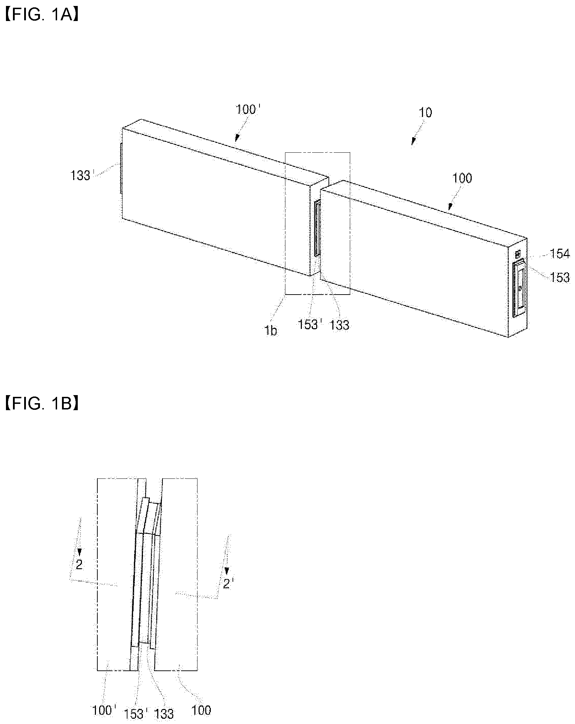

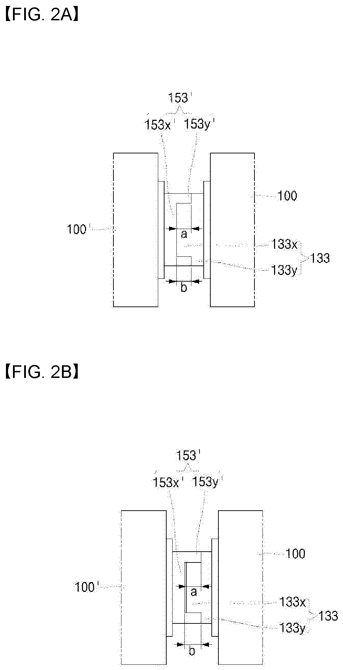

Referring to FIGS. 1A and 1B, a perspective view and a partially enlarged view of an exemplary battery module according to the present invention are shown. In addition, referring to FIGS. 2A and 2B, examples of cross-sectional views taken along line 2-2' of FIG. 1B are shown. The battery module 10 may have two secondary batteries 100 electrically connected to each other. Preferably, the battery module 10 may have two secondary batteries 100 connected in series. Here, the two secondary batteries 100 included in the battery module 10 may have the same structure.

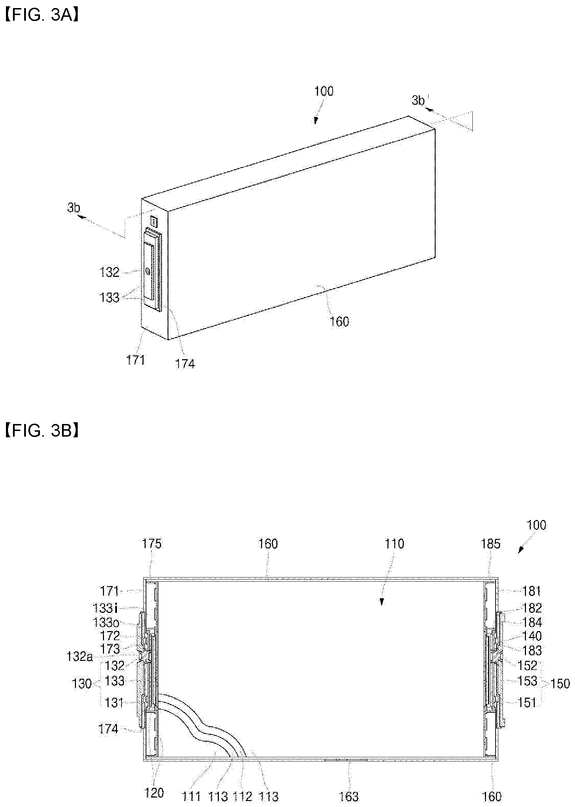

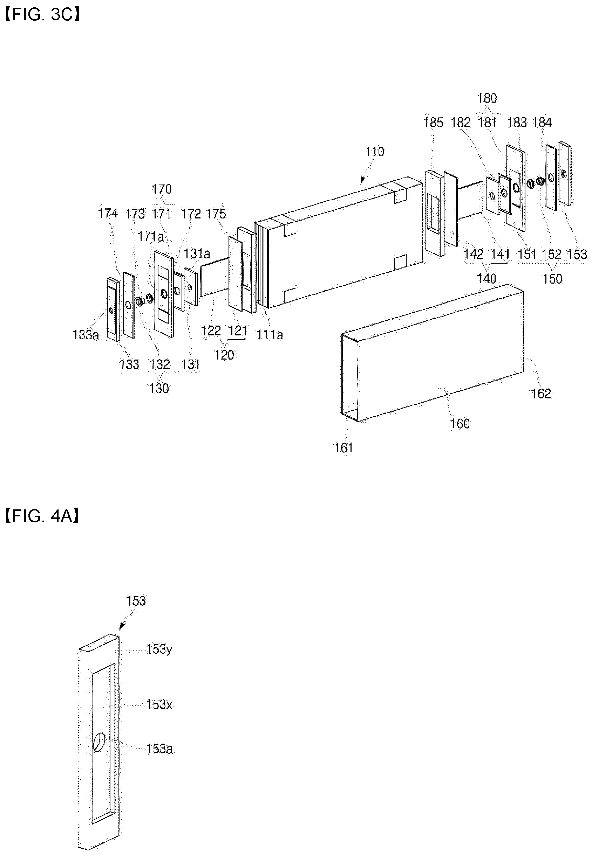

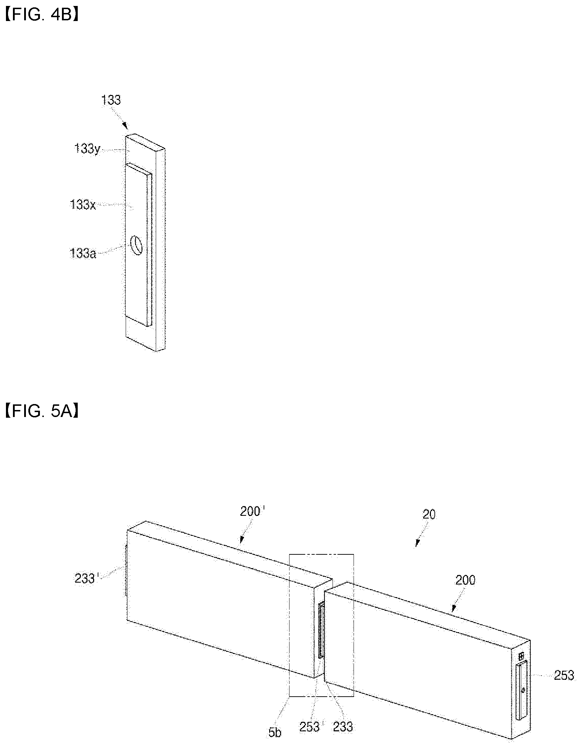

Referring to FIG. 3A, a perspective view of a secondary battery 100 is shown, referring to FIG. 3B, a cross-sectional view taken along line 3b-3b' in the secondary battery 100 of FIG. 3A is shown, and referring to FIG. 3C, an exploded perspective view of the secondary battery 100 of FIG. 3A is shown. In addition, referring to FIGS. 4A and 4B, enlarged perspective views of a first outer terminal plate and a second outer terminal plate of the secondary battery 100 are shown, respectively.

Hereinafter, the battery module 10 of the present invention will be described with reference to FIGS. 1A, 1B, 2A, 2C, 3A to 3C, 4A and 4B.

First, the secondary battery 100 may include an electrode assembly 110, a first current collector 120, a first terminal 130, a second current collector 140, a second terminal 150, a case 160, a first cap assembly 170, and a second cap assembly 180.

The electrode assembly 110 may be formed by winding or stacking a laminate of a first electrode plate 111, a separator 113, and a second electrode plate 112, which are formed in a thin plate or a film shape. When the electrode assembly 110 is a wound laminate, the winding axis may be parallel to the longitudinal direction of the case 160 (the direction perpendicular to the longitudinal directions of the first cap assembly 170 and the second cap assembly 180). In addition, the electrode assembly 110 may be a stack type rather than a winding type, and the shape of the electrode assembly 110 is not limited in the present invention. In addition, the electrode assembly 110 may be received inside the case 160 by stacking one or more electrode assemblies 110 so that the long sides thereof are adjacent to each other, and the number of electrode assemblies 110 is not limited in the present invention.

The first electrode plate 111 of the electrode assembly 110 may serve as a negative electrode, and the second electrode plate 112 may serve as a positive electrode. Of course, the opposite is also possible.

The first electrode plate 111 may be formed by applying a first electrode active material such as graphite or carbon on a first electrode current collector formed of a metal foil such as copper, a copper alloy, nickel, or a nickel alloy, and may include a first electrode tab 111a (or first uncoated portion) to which the first electrode active material is not applied. the first electrode tab 111a may become a current flow path between the first electrode plate 111 and the first terminal 130.

In some examples, the first electrode tab 111a may be formed by cutting the first electrode plate 111 in advance so as to protrude from one side when manufacturing the first electrode plate 111, and may be formed integrally with the first electrode plate 111. In some examples, the first electrode plate 111 may have the first uncoated portion 111a of the first electrode plate 111 protrude from one side further than the separator 113 without a separate cutting.

The first electrode tab 111a, which is an uncoated portion of the first electrode plate 111 exposed on one side of the electrode assembly 110, may be coupled to the first current collector 120 by welding, or the first terminal 130 may be directly coupled thereto by welding.

The second electrode plate 112 may be formed by applying a second electrode active material such as a transition metal oxide to a second electrode current collector formed of a metal foil such as aluminum or an aluminum alloy and may include a second electrode tab 112a (or second uncoated portion) to which the first electrode active material is not applied. In some examples, the second electrode tab 112a may be formed by cutting the second electrode plate 112 in advance so as to protrude to the other side when manufacturing the second electrode plate 112, and may be formed integrally with the second electrode plate 112. In some examples, the second electrode plate 112 may have the first uncoated portion 112a of the second electrode plate 112 protrude further to the other side than the separator 113 without a separate cutting. The second electrode tab 112a, which is an uncoated portion of the second electrode plate 112 exposed on the other side of the electrode assembly 110, may be coupled to the second current collector 140 by welding, or the second terminal 150 may be directly coupled thereto by welding.

In some examples, the first electrode tab 111a may be located on a left short side surface of the electrode assembly 110, and the second electrode tab 112a may be located on a right short side surface of the electrode assembly 110. Here, the left and right are for convenience of explanation on the basis of the secondary battery 100 shown in FIGS. 3A to 3C, and the position thereof may change when the secondary battery 100 is rotated left and right or up and down. The following description of various components will also be made on the basis of the secondary battery 100 shown in FIGS. 3A to 3C.

In some examples, the, separator 113 is positioned between the first electrode plate 111 and the second electrode plate 112 to prevent an electrical short circuit and allows lithium ions to move, and may be made of polyethylene, polypropylene, or a composite film of polyethylene and polypropylene. In addition, the separator 113 may be replaced by an inorganic solid electrolyte, such as a sulfide, oxide or phosphate compound, which does not require a liquid or gel electrolyte.

The first electrode tab 111a of the first electrode plate 111 and the second electrode tab 112a of the second electrode plate 112 are respectively positioned at both ends of the electrode assembly 110. In some examples, the electrode assembly 110 may be accommodated in the case 160 with an electrolyte. In some examples, the electrolyte may include an organic solvent, such as EC, PC, DEC, EMC, or DMC, and a lithium salt, such as LiPF6 or LiBF4. In addition, the electrolyte may be in a liquid, solid or gel phase. In some examples, when an inorganic solid electrolyte is used, the electrolyte may be omitted.

The first current collector 120 is formed of metal and may electrically connect the first electrode plate 111 and the first terminal 130 to each other. The first current collector 120 may be a metal plate, which is easily bent, and has one side 121 in contact with and coupled, by welding, to the first electrode tab 111a of the electrode assembly 110, and the other side 122 in contact with and coupled, by welding, to the first terminal 130. The first current collector 120 may be made of copper or a copper alloy.

The first terminal 130 is formed of metal and may be in contact with and welded to the other side 122 of the first current collector 120 so as to be electrically connected. In some examples, the first terminal 130 may include a first inner terminal plate 131, a first terminal pillar 132, and a first outer terminal plate 133.

Here, the first inner terminal plate 131 may be positioned on the inner side of the first cap plate 171, and the first outer terminal plate 133 may be positioned on the outer side of the first cap plate 171. In addition, the first terminal pillar 132 may pass through the first cap plate 171 to be coupled with the first outer terminal plate 133 on the outer side of the first cap plate 171 and may be coupled with the first inner terminal plate 131 on the inner side of the first cap plate 171.

In addition, a first inner insulation member 172 may be further interposed between the first inner terminal plate 131 and the first cap plate 171, and a first outer insulation member 174 may be further interposed between the first outer terminal plate 133 and the first cap plate 171. In addition, a first seal gasket 173 may be further interposed between the first terminal pillar 132 and the first cap plate 171, thereby sealing the first terminal 130 and the first cap plate 171 to each other.

First, the first inner terminal plate 131 may be in contact with and coupled to the other side 122 of the first current collector 120 on one side located on the right side. The first inner terminal plate 131 may be provided with a terminal hole 131a penetrating between the one side and the other side. Of course, the terminal hole 131a may be formed to correspond to the diameter of the first terminal pillar 132. The terminal hole 131a may be located approximately at the center of the first inner terminal plate 131.

The first terminal pillar 132 may be fitted and coupled into the terminal hole 131a of the first inner terminal plate 131. For example, the first terminal pillar 132 may be riveted and fixed on one side in a state of being fitted into the terminal hole 131a of the first inner terminal plate 131. The first current collector 120 may be coupled by welding to one side of the first inner terminal plate 131 coupled to the first terminal pillar 132. The first inner terminal plate 131 may be made of the same metal as the first current collector 120, such as copper or a copper alloy. The first inner terminal plate 131 is made of the same metal as the first current collector 120, and thus can be easily welded with the first current collector 120.

The first terminal pillar 132 may be in the shape of a pillar and may protrude and extend to the outside of the first cap plate 171. In addition, a flange 132a may be formed on the outer side of the first cap plate 171 to prevent the first terminal pillar 132 from being separated from the first cap plate 171. With respect to the first cap plate 171, the first terminal pillar 132 may be inserted into and coupled to a terminal hole 133a of the first outer terminal plate 133 from the outer side and may be inserted into and coupled to the terminal hole 131a of the first inner terminal plate 131 from the inner side. Here, the flange 132a may be located between the first outer terminal plate 133 and the first cap plate 171.

The first outer terminal plate 133 may be provided with the terminal hole 133a penetrating between one surface and the other surface. Here, the terminal hole 133a may be located approximately at the center of the first outer terminal plate 133. Here, the first outer terminal plate 133 may include a first protrusion portion 133x in which the center of the outer surface protrudes outwardly, and the inner surface may be flat. Here, the inner surface may be a surface facing the first cap plate 171 and may be a surface that comes into contact with the first outer insulation member 174 interposed between the first cap plate 171 and the first outer terminal plate 133. In addition, the outer surface may be a surface opposite to the inner surface and facing the outside of the secondary battery 100.

Due to the first protrusion portion 133x provided at the center, the first outer terminal plate 133 may have edges relatively recessed in the direction of the first cap plate 171. Here, in the first outer terminal plate 133, a portion concavely stepped into the inner surface direction compared to the first protrusion portion 133x may be referred to as a first recessed portion 133y. The first recessed portion 133y may be provided in the shape of a square ring along the edge on the outer surface of the first outer terminal plate 133. Here, the height difference between the first protrusion portion 133x and the first recessed portion 133y may be a first height (a).

The first outer terminal plate 133 may be provided with the terminal hole 133a approximately at the center of the first protrusion portion 133x. An outer extension part of the first terminal pillar 132 may be fitted and coupled into the terminal hole 133a of the first outer terminal plate 133. For example, the first terminal pillar 132 may be fixed by riveting and/or welding in a state of being fitted into the terminal hole 133a of the first outer terminal plate 133 from the outer surface located on the left side. The first outer terminal plate 133 has one side positioned on the right side and may face the outer surface of the first cap plate 171. Of course, the outer insulating member 174 made of an insulating material may be interposed between one side of the first outer terminal plate 133 and the outer surface of the first cap plate 171 for insulation.

In the first terminal 130, the first outer terminal plate 133 may be made of the same metal as the second terminal 150. The second outer terminal plate 133 may be made of aluminum or an aluminum alloy. In addition, the first terminal pillar 132 can be made of the same metal as the first outer terminal plate 133. That is, in the first terminal 130, the first inner terminal plate 131 and the first terminal pillar 132 are made of dissimilar metals, but may be coupled by riveting. The first terminal 130 may have the first outer terminal plate 133 and the first terminal pillar 132 exposed to and protruding from the outer side of the first cap plate 171. In addition, the first inner terminal plate 131 may be electrically connected to the first current collector 120 on the inner side of the first cap plate 171.

Here, one side of the first inner terminal plate 131 may face the left short side of the electrode assembly 110. Of course, the first current collector 120 may be interposed between the one side of the first inner terminal plate 131 and the left short side of the electrode assembly 110, so that the first terminal 130 and the first electrode tab 111a of the electrode assembly 110 may be electrically connected to each other.

The second current collector 160 is formed of metal and may electrically connect the second electrode plate 112 and the second terminal 150 to each other. The second current collector 160 may be a metal plate, which is easily bent, and has one side in contact with and coupled, by welding, to the second electrode tab 112a of the electrode assembly 110, and the other side in contact with and coupled, by welding, to the second terminal 150. In addition, the second current collector 160 may be coupled to the electrode assembly 110 and the second terminal 150 in a symmetrical form with respect to the first current collector 130 on the basis of the electrode assembly 110. In addition, the second current collector 160 may be made of aluminum or an aluminum alloy.

The second terminal 150 is formed of metal and may be electrically connected to the second current collector 160. In some examples, the second terminal 150 may include a second inner terminal plate 151, a second terminal pillar 152, and a second outer terminal plate 153.

Here, the second inner terminal plate 151 may be positioned on the inner side of the second cap plate 181, and the second outer terminal plate 153 may be positioned on the outer side of the second cap plate 181. Of course, a first inner insulation member 182 may be further interposed between the second inner terminal plate 151 and the second cap plate 181. A second outer insulation member 184 may be further interposed between the second outer terminal plate 153 and the second cap plate 181. In addition, a second seal gasket 183 may be further interposed between the second terminal pillar 152 and the second cap plate 181. In addition, the second terminal pillar 152 may pass through the second cap plate 181 to be coupled with the second outer terminal plate 153 on the outer side of the second cap plate 181 and may be coupled with the second inner terminal plate 151 on the inner side of the second cap plate 181.

The second terminal 150 may be similar to the first terminal 130 in terms of shape and structure. However, the shape of the outer surface of the second outer terminal plate 153 of the second terminal 150 may be different from the outer surface of the first outer terminal plate 133 of the first terminal 130. The second outer terminal plate 153 may have the outer surface shaped to correspond to the outer surface of the first outer terminal plate 133. The second outer terminal plate 153 may include a second recessed portion 153x laterally recessed into the center of the outer surface. Due to the second recessed portion 153x provided at the center, the second outer terminal plate 153 may have edges relatively recessed outwardly. Here, in the second outer terminal plate 153, a portion protruding outwardly from the edges compared to the second recessed portion 153x may be referred to as a second protrusion portion 153y.

Here, the second protrusion portion 153y may correspond to the shape of the first recessed portion 133y of the first inner terminal plate 131, and the second recessed portion 153x may correspond to the shape of the first protrusion portion 133x of the first inner terminal plate 131. The second protrusion portion 153y may protrude outwardly in the shape of a square ring along the edge from the outer surface of the second outer terminal plate 153. Here, the height difference between the second recessed portion 153x and the second protrusion portion 153y may be a second height difference (y).

The second outer terminal plate 153 may be provided with a terminal hole approximately at the center of the second recessed portion 153x. In addition, an outer extension part of the second terminal pillar 152 may be fitted and coupled into the terminal hole of the second outer terminal plate 153.

In addition, the second terminal 150 may be coupled to the electrode assembly 110 through the second current collector 140 in a symmetrical form with respect to the first terminal 130 on the basis of the electrode assembly 110. In addition, in the second terminal 150, the second inner terminal plate 151, the second terminal pillar 152, and the second outer terminal plate 153 may all be made of aluminum or an aluminum alloy. Therefore, the second terminal pillar 152 may be coupled to the second inner terminal plate 151 by riveting and/or welding, and may be coupled to the second outer terminal plate 153 by riveting and/or welding.

The case 160 has a hollow, roughly rectangular shape with openings 161 and 162 formed on both sides, and the electrode assembly 110 combined with the first current collector 130 and the second current collector 160 may be inserted into the interior of the case 160 through the openings 161 and 162.

The case 160 may include upper and lower surfaces of a rectangle extending along the longitudinal direction of the case, and two long side surfaces of a rectangle connecting the long sides of the upper and lower surfaces and extending along the longitudinal direction. The case 160 may be formed of the upper surface, the lower surface, and the two long side surfaces as an integral part. The case 160 may have a vent hole passing through the upper surface or the lower surface. The case 160 may have a safety vent 163 installed in the vent hole. In addition, the safety vent 163 may have a notch that is thinner than other areas and may be opened at a set pressure.

The first cap assembly 170 may be coupled to the left opening 161 of the case 160. In some examples, the first cap assembly 170 may include a first cap plate 171, a first inner insulation member 172, a first seal gasket 173, a first outer insulation member 174, and a first insulation member 175. The first cap plate 171 may have a flat square plate shape and seal the left opening 161 of the case 160. The first cap plate 171 may be provided with a terminal hole 171a penetrating between the outer surface and the inner surface. The first terminal pillar 132 may pass through the first cap plate 171 to be coupled to the terminal hole 171a of the first cap plate 171. In addition, the first terminal pillar 132 may be coupled to the first outer terminal plate 133 on the outer side of the first cap plate 171 and may be coupled to the first inner terminal plate 131 on the inner side of the first cap plate 171. Here, the first inner terminal plate 131 and a portion of the right side of the first terminal pillar 132 may be located inside the case 160.

The first inner insulation member 172 may be interposed between the inner surface of the first cap plate 171 and the first inner terminal plate 131. The first inner insulation member 172 may be in close contact with the inner surface of the first cap plate 171 and may also be in close contact with the first seal gasket 173. The first inner insulation member 172 may be made of an insulating material and may insulate the first cap plate 171 and the first inner terminal plate 131 from each other.

In addition, the first seal gasket 173 is made of an insulating material and is provided between the first cap plate 171 and the first terminal pillar 132 to seal the first cap plate 171 and the first terminal pillar 132 to each other. That is, the first seal gasket 173 may be interposed between the first cap plate 171 and the first terminal pillar 132. The first seal gasket 173 prevents external moisture from penetrating into the interior of the secondary battery 100 or prevents the electrolyte contained inside the secondary battery 100 from leaking out to the exterior. The first seal gasket 173 may have one side in contact with the first outer insulation member 174 and the other side in contact with the first inner insulation member 172.

In addition, the first outer insulation member 174 may be interposed between the outer surface of the first cap plate 171 and the first outer terminal plate 133. The first outer insulation member 174 may be in close contact with the first cap plate 171 and may also be in close contact with the flange 132a of the first terminal pillar 132. The first coupling member 172 may be made of an insulating material and may insulate the first cap plate 171 and the first outer terminal plate 133 from each other.

That is, the first cap plate 171 may be electrically separated from the first terminal 130 by the first inner insulation member 172, the first seal gasket 173, and the first outer insulation member 174.

In addition, the first insulation member 175 may be interposed between the first cap plate 171 and the electrode assembly 110. The first insulation member 175 may be made of an insulating material, may prevent movement of the electrode assembly 110, and may prevent one side of the electrode assembly 110 from making electrical contact with the first cap plate 171.

In addition, after the electrode assembly 110 combined with the first current collector 120 is accommodated in the case 160, the first cap plate 171 combined with the first terminal 130 may seal the opening of the case 160. Of course, before the first cap plate 171 seals the case 160, one side 121 of the first current collector 120 and the first inner terminal plate 131 of the first terminal 130 may be coupled to each other by welding.

The second cap assembly 180 may be coupled to the right opening 162 of the case 160. In some examples, the second cap assembly 180 may include a second cap plate 181, a second inner insulation member 182, a second seal gasket 183, a second outer insulation member 184, and a second insulation member 185. The second cap assembly 180 may be the same as the first cap assembly 170 in terms of shape and structure. In addition, the shape and structure in which the second cap assembly 180 and the second terminal 150 are coupled to each other may be the same as the shape and structure in which the first cap assembly 170 and the first terminal 130 are coupled to each other. However, the coupling shape of the second cap assembly 180 and the second terminal 150 may be symmetrical to the coupling shape of the first cap assembly 170 and the first terminal 130 on the basis of the case 160.

In the secondary battery 100, the first cap assembly 170 coupled with the first terminal 130 may be coupled to one open side of the case 160, and the second cap assembly 180 coupled with the second terminal 150 may be coupled to the other open side of the case 160, so that the first terminal 130 and the second terminal 150 are positioned on both sides with respect to the case 160.

In addition, in the secondary battery 100, the first outer terminal plate 133 of the first terminal 130 and the second outer terminal plate 153 of the second terminal 150 may be made of the same metal. In addition, the battery module 10 may have two secondary batteries 100 electrically connected in series. Here, the two secondary batteries 100 included in the battery module 10 may have the same structure. For the sake of convenience, the following description will be made on the assumption that one secondary battery in the battery module 10 is referred to as a first secondary battery 100, and the other secondary battery is referred to as a second secondary battery 100'.

In the battery module 10, in a state in which the first protrusion portion 133x of the first outer terminal plate 133 of the first terminal 130 of the first secondary battery 100 is inserted into a second recessed portion 153x' of a second outer terminal plate 153' of a second terminal 150' of the second secondary battery 100', 153', the first recessed portion 133y of the first secondary battery 100 and a second protrusion portion 153y' of the second secondary battery 100' may be coupled and electrically connected to each other by welding. That is, the first outer terminal plate 133 of the first secondary battery 100 and the second outer terminal plate 153' of the second secondary battery 100' may be coupled, in a state of being in contact, to each other by welding from the side of the second protrusion portion 153y' of the second secondary battery 100. Here, the welding can be laser welding.

Here, the first height (a), which is the height between the first protrusion portion 133x and the first recessed portion 133y of the first outer terminal plate 133 of the first secondary battery 100, may be equal to or smaller than the second height (b), which is the height between the second recessed portion 153x and the second protrusion portion 153y of the second outer terminal plate 153' of the second secondary battery 100'.

For example, when the first height (a) is equal to the second height (b), as shown in FIG. 2A, the first protrusion portion 133x of the first secondary battery 100 and the second recessed portion 153x of the second secondary battery 100' may come into contact with each other. As another example, when the first height (a) is smaller than the second height (b), the first protrusion portion 133x of the first secondary battery 100 and the second recessed portion 153x of the second secondary battery 100' may be spaced apart from each other. When the first height (a) is smaller than the second height (b), a gap is formed between the first protrusion portion 133x of the first secondary battery 100 and the second recessed portion 153x of the second secondary battery 100', and thus the amount of displacement in contact resistance can be minimized.

In the battery module 10, the first outer terminal plate 133 and the second outer terminal plate 153' may be macroscopically flat surfaces, but may be microscopically rough surfaces. Therefore, as the area in which the first outer terminal plate 133 and the second outer terminal plate 153' are coupled to each other by welding increases, the gap between the rough surfaces may be filled by welding, which can reduce the electrical contact resistance. That is, in the battery module 10, since the first outer terminal plate 133 and the second outer terminal plate 153' of the two secondary batteries 100 and 100' are welded with each other along the edges thereof, the welding area increases, which can reduce the contact resistance.

In addition, in the battery module 10, two secondary batteries 100 are connected in series and a first terminal 130 and a second terminal 150 is provided on both sides, and thus, when a plurality of battery modules 10 are combined in a pack form, cooling members (not shown) can be combined in upper and lower areas of the case 160, respectively, thereby reducing deterioration of the battery module 10 and improving cooling performance. As an example, in a state in which a plurality of battery modules 10 are arranged so that long side surfaces face each other, first terminals and/or second terminals of a battery pack, exposed to both sides, may be electrically connected, respectively.

In addition, the battery module 10 is provided with a first terminal 130 and a second terminal 150 on both sides, respectively, and thus, when a plurality of battery modules 10 are combined in a pack form, the charge/discharge current flows along the respective terminals in both directions, thereby ameliorating deterioration compared to a case when two terminals are provided on one side and the charge/discharge current flows through two terminals on one side. In addition, when a plurality of battery modules 10 are combined in a pack form, the respective terminals can be connected to each other in both directions, thereby improving space utilization.

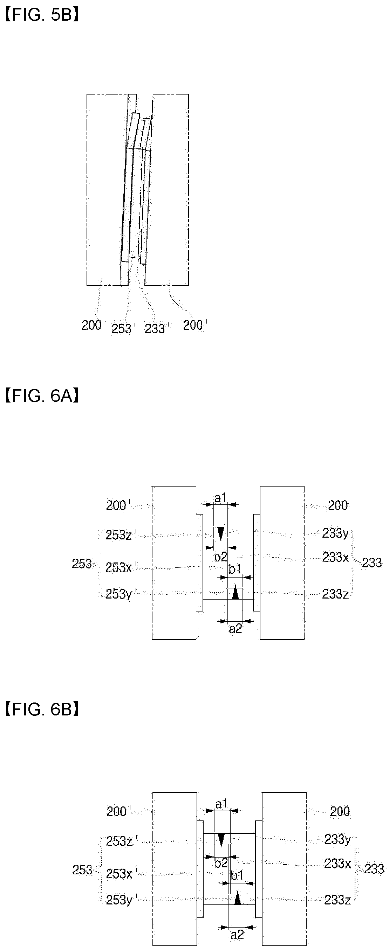

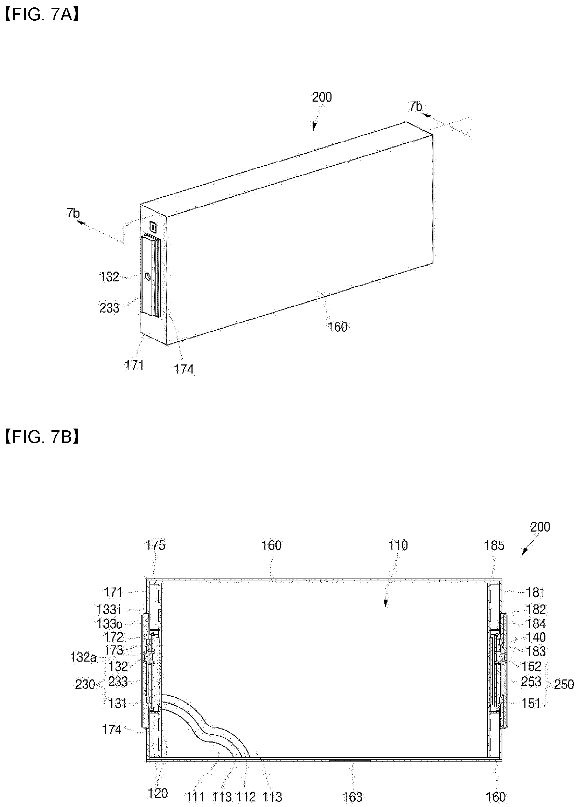

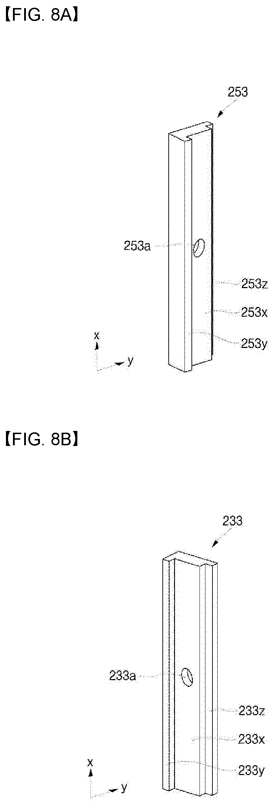

Referring to FIGS. 5A and 5B, a perspective view and a partially enlarged view of an exemplary battery module according to the present invention are shown. In addition, referring to FIGS. 6A and 6B, examples of a plan view of FIG. 5B are shown. The battery module 20 may have two secondary batteries 200 connected in series. Here, the two secondary batteries 200 included in the battery module 20 may have the same structure. Referring to FIG. 7A, a perspective view of a secondary battery 200 is shown, and referring to FIG. 7B, a cross-sectional view taken along line 7b-7b' of the secondary battery 200 of FIG. 7A is shown. In addition, referring to FIGS. 8A and 8B, enlarged perspective views of a first outer terminal plate and a second outer terminal plate of the secondary battery 200 are shown, respectively.

Hereinafter, the battery module 20 of the present invention will be described with reference to FIGS. 5A, 5B, 6A, 6B, 7A, 7B, 8A, and 8B.

First, the secondary battery 200 may include an electrode assembly 110, a first current collector 120, a first terminal 230, a second current collector 140, a second terminal 250, a case 160, a first cap assembly 170, and a second cap assembly 180. In addition, the first terminal 230 may include a first inner terminal plate 131, a first terminal pillar 132, and a first outer terminal plate 233. In addition, the second terminal 250 may include a second inner terminal plate 151, a second terminal pillar 152, and a second outer terminal plate 253.

The secondary battery 200 shown in FIGS. 7A and 7B may be the same as the secondary battery 100 shown in FIGS. 3A to 3C in terms of the electrode assembly 110, the first current collector 120, the second current collector 140, the case 160, the first cap assembly 170, and the second cap assembly 180. In addition, the secondary battery 200 shown in FIGS. 7A and 7B may be the same as the secondary battery 100 shown in FIGS. 3A to 3C in terms of the first inner terminal plate 131 and first terminal pillar 132 of the first terminal 230 and the second inner terminal plate 151 and second terminal pillar 152 of the second terminal 250.

Therefore, the following description of the secondary battery 200 will focus on the first outer terminal plate 233 and the second outer terminal plate 253, which are different from those of the secondary battery 100.

The first outer terminal plate 233 may include a first body portion 233x having a plate shape, a first protrusion portion 233y protruding outwardly from an outer surface of the first body portion 233x, and a first recessed portion 233z concavely stepped inwardly from the outer surface of the first body portion 233x.

Here, the first body portion 233x may be in the shape of a plate having a flat outer surface and an inner surface. In addition, the first protrusion portion 233y and the first recessed portion 233z may be integrally formed with the first body portion 233x, and the inner surface may be made of aluminum or an aluminum alloy that is on the same plane as the inner surface of the first body portion 233x.

The first protrusion portion 233y may extend along the first direction (x), which is the longitudinal direction of the first cap plate 171, on one side of the outer surface of the first body portion 233x. The first recessed portion 233z may extend along the first direction (x) on the other side of the outer surface of the first body portion 233x. That is, the first protrusion portion 233y and the first recessed portion 233z may be provided on the outer surface of the first body portion 233x so as to be symmetrical with the first body portion 233x. Here, the lengths of the first body portion 233x, the first protrusion portion 233y, and the first recessed portion 233z in the first direction (x) may be the same. Here, the height difference between the outer surface of the first body portion 233x and the outer surface of the first protrusion portion 233y may be a first protrusion height (a1), and the height difference between the outer surface of the first body portion 233x and the outer surface of the first recessed portion 233x may be a first recess height (b1).

Due to the first protrusion portion 233y provided on one side of the outer surface and the first recessed portion 233z provided on the other side, the first outer terminal plate 233 may have two step portions and may have a stepped shape.

The second outer terminal plate 253 may include a second body portion 253x, a second protrusion portion 253y protruding outwardly from the outer surface of the second body portion 253x, and a second recessed portion 253z concavely stepped inwardly from the outer surface of the second body portion 233x. The second outer terminal plate 253 may be the same as the first outer terminal plate 233 in terms of shape and structure. However, in the second outer terminal plate 153, the second recessed portion 253z may be provided on the other side of the outer surface of the second body portion 253x, and the second protrusion portion 253y may be provided on one side of the outer surface of the second body portion 253x. That is, the shape of the outer surface of the second outer terminal plate 253 may correspond to the outer surface of the first outer terminal plate 233. In addition, the second outer terminal plate 253 may be coupled to the second cap assembly 180 so as to be symmetrical with the first outer terminal plate 233 on the basis of the electrode assembly 110.

Here, the second protrusion portion 253y may correspond to the shape of the first recessed portion 133z of the first inner terminal plate 131, and the second recessed portion 153x may correspond to the shape of the first protrusion portion 133y of the first inner terminal plate 131.

Here, the height difference between the outer surface of the second body portion 253x and the outer surface of the second protrusion portion 253y may be a second protrusion height (a2), and the height difference between the outer surface of the second body portion 253x and the outer surface of the second recessed portion 253x may be a second recess height (b2).

In the secondary battery 200, the first outer terminal plate 233 of the first terminal 230 and the second outer terminal plate 253 of the second terminal 250 may be made of the same metal. In addition, the battery module 20 may have two secondary batteries 200 electrically connected in series. Here, the two secondary batteries 200 included in the battery module 20 may have the same structure. For the sake of convenience, the following description will be made on the assumption that one secondary battery in the battery module 20 is referred to as a first secondary battery 200, and the other secondary battery is referred to as a second secondary battery 200'.

Therefore, in the battery module 20 in which two secondary batteries 200 and 200' are connected in series, a first protrusion portion 233y of a first outer terminal plate 233 of a first terminal 230 of the first secondary battery 200 and a second recessed portion 253z' of a second outer terminal plate 253' of a second terminal 250' of the second secondary battery 200' may be connected in series by direct welding in a state of being in contact with and overlapping each other. In addition, the first recessed portion 233z of the first outer terminal plate 233 of the first terminal 230 of the first secondary battery 200 and the second protrusion portion 253z' of the second outer terminal plate 253' of the second terminal 250' of the second secondary battery 200' may be connected in series by direct welding in a state of being in contact with and overlapping each other. Here, the first outer terminal plate 233 of the first secondary battery 200 and the second outer terminal plate 253' of the second secondary battery 200' may be coupled to each other at one side and the other side by welding along the first direction (x). That is, two secondary batteries 200 and 200' may be connected in series and coupled to each other at the sides of the first and second protrusion portions 233y and 253y' by welding) along the first direction (x). Here, the welding may be laser welding.

Here, the first protrusion height (a1), which is the height between the first protrusion portion 233y of the first outer terminal plate 233 of the first secondary battery 200 and the first body portion 233x, may be equal to or greater than the second recess height (b2), which is the height between the second recessed portion 253z of the second outer terminal plate 253' of the second secondary battery 200' and the second body portion 153x. In addition, the second protrusion height (b1), which is the height between the second recessed portion 253z of the second outer terminal plate 253' of the second secondary battery 200' and the second body portion 153x and the second body portion 153x, may be equal to or greater than the first recess height (b1), which is the height between the first recessed portion 233z of the first outer terminal plate 233 of the first secondary battery 200 and the first body portion 233x. In addition, the first recess height (b1) and the second recess height (b2) may be equal to each other, and the first protrusion height (a1) and the second protrusion height (a2) may be equal to each other.

For example, when the first protrusion height (a1) is equal to the second recess height (b2), and the second protrusion height (a2) is equal to the first recess height (b1), as shown in FIG. 6A, the first body portion 233x of the first secondary battery 200 and the second body portion 253x of the second secondary battery 200' may come into contact with each other. As another example, when the first protrusion height (a1) is greater than the second recess height (b2), and the second protrusion height (a2) is greater than the first recess height (b1), the first body portion 233x of the first secondary battery 200 and the second body portion 253x of the second secondary battery 200' may be spaced apart from each other. In this way, when the first protrusion height (a1) is greater than the second recess height (b2), and the second protrusion height (a2) is greater than the first recess height (b1), a gap may be formed between the first body portion 233x of the first secondary battery 200 and the second body portion 253x of the second secondary battery 200', and thus the amount of displacement in contact resistance can be minimized.

While the foregoing embodiment has been described to practice the secondary battery and battery module including the same according to the present invention, the present invention is not restricted to the above-described embodiments and many variations are possible within the spirit and scope of the present invention. A person skilled in the art will recognize that various modifications to the embodiments disclosed are within the technical scope of the present invention.

### INDUSTRIAL APPLICABILITY

Various embodiments of the present invention can be applied to a secondary battery and a battery module including same.

## Claims

1. A secondary battery comprising:
an electrode assembly having a first electrode tab and a second electrode tab respectively exposed on both sides thereof;
a case accommodating the electrode assembly and having two open sides;
a first cap plate sealing one open side of the case;
a first terminal electrically connected to the first electrode tab and exposed to the outside of the first cap plate;
a second cap plate sealing the other open side of the case; and
a second terminal electrically connected to the second electrode tab and exposed to the outside of the second cap plate,
wherein a first protrusion portion protruding outwardly from the first terminal of the first secondary battery is coupled to and connected in series, by welding, with a second recessed portion recessed into the second terminal of the second secondary battery.

2. The secondary battery as claimed in claim 1, wherein the first terminal comprises:
a first inner terminal plate positioned on the inner side of the first cap plate;
a first outer terminal plate positioned on the outer side of the first cap plate and having a first protrusion portion protruding outwardly and a first recessed portion recessed into an outer surface thereof; and
a first terminal pillar rivet-coupled to the first inner terminal plate on the inner side of the first cap plate and passing through the first cap plate to be coupled, by riveting or welding, to the first outer terminal plate on the outer side of the first cap plate.

3. The secondary battery as claimed in claim 2, wherein the first outer terminal plate is made of the same metal as the second terminal and is made of a dissimilar metal to the first inner terminal plate.

4. The secondary battery as claimed in claim 2, wherein the first protrusion portion is positioned at the center of the outer surface of the first outer terminal plate, and the first recessed portion is provided in a ring shape along the edge of the outer surface of the first outer terminal plate.

5. The secondary battery as claimed in claim 4, wherein the second terminal comprises:
a second inner terminal plate positioned on the inner side of the second cap plate;
a second outer terminal plate positioned on the outer side of the second cap plate and having a second recessed portion recessed into the center of the outer surface and a second protrusion portion protruding outwardly in a ring shape along the edge of the outer surface;
and a second terminal pillar rivet- and/or weld-coupled to the second inner terminal plate on the inner side of the second cap plate and passing through the second cap plate to be coupled, by riveting or welding, to the second outer terminal plate on the outer side of the second cap plate.

6. The secondary battery as claimed in claim 5, wherein the second inner terminal plate, the second outer terminal plate, and the second terminal pillar are made of the same metal.

7. The secondary battery as claimed in claim 2, wherein the first outer terminal plate comprises a first body portion in the shape of a flat plate, the first protrusion portion extends along a first direction, which is the longitudinal direction of the first cap plate, on one side of the first body portion, and the first recessed portion extends along the first direction on the other side of the outer surface of the first body portion.

8. The secondary battery as claimed in claim 7, wherein the second terminal comprises:
a second inner terminal plate positioned on the inner side of the second cap plate;
a second outer terminal plate positioned on the outer side of the second cap plate and having a second body portion in the shape of a flat plate, a second recessed portion recessed into one side of the outer surface of the second body portion extending along the first direction, and a second protruding portion protruding outwardly from the other side of the outer surface of the second body portion extending along the first direction on the other side of the outer surface of the second body portion; and
a second terminal pillar rivet- and/or weld-coupled to the second inner terminal plate on the inner side of the second cap plate and passing through the second cap plate to be coupled, by riveting or welding, to the second outer terminal plate on the outer side of the second cap plate.

9. The secondary battery as claimed in claim 1, further comprising:
a first current collector electrically connecting the first electrode tab and the first terminal to each other; and
a second current collector electrically connecting the second electrode tab and the second terminal to each other may be further included.

10. A battery module comprising a first secondary battery having the same structure as any one of the secondary batteries of claims 1 to 6 and a second secondary battery, wherein:
the first terminal of the first secondary battery comprises a first outer terminal plate exposed to the outside of the first cap plate;
the second terminal of the second secondary battery comprises a second outer terminal plate exposed to the outside of the second cap plate; and
the first outer terminal plate of the first secondary battery and the second outer terminal plate of the second secondary battery are connected in series by welding in a state in which the outer surfaces thereof are in contact with each other.

11. The battery module as claimed in claim 10, wherein a first protrusion portion protruding outwardly from the center of the first outer terminal plate of the first secondary battery is in contact with a second recessed portion recessed into the center of the second outer terminal plate of the second secondary battery.

12. The battery module as claimed in claim 10, wherein a first protrusion portion protruding outwardly from the center of the first outer terminal plate of the first secondary battery and a second recessed portion recessed into the center of the second outer terminal plate of the second secondary battery are spaced apart from each other.

13. The battery module as claimed in claim 10, wherein: the first outer terminal plate of the first secondary battery comprises a first body portion in the shape of a flat plate, the first protrusion portion extends along a first direction, which is the longitudinal direction of the first cap plate, on one side of the first body portion, and the first recessed portion extends along the first direction on the other side of the outer surface of the first body portion; and
the second outer terminal plate of the second secondary battery has a second body portion in the shape of a flat plate, a second recessed portion recessed into one side of the outer surface of the second body portion extending along the first direction, and a second protruding portion protruding outwardly from the other side of the outer surface of the second body portion extending along the first direction on the other side of the outer surface of the second body portion.

14. The battery module as claimed in claim 13, wherein the first body portion of the first outer terminal plate of the first secondary battery is in contact with the second body portion of the second outer terminal plate of the second secondary battery.

15. The battery module as claimed in claim 13, wherein the first body portion of the first outer terminal plate of the first secondary battery and the second body portion of the second outer terminal plate of the second secondary battery are spaced apart from each other.
